Europäisches Patentamt

European Patent Office

Office européen des brevets

(11) Publication number: **0 381 326**
**A2**

## (12) EUROPEAN PATENT APPLICATION

(21) Application number: **90300388.7**

(22) Date of filing: 12.01.90

(51) Int. Cl.5: **H04M 1/72**

(30) Priority: 28.01.89 GB 8901904

(43) Date of publication of application:
08.08.90 Bulletin 90/32

(84) Designated Contracting States:
AT BE CH DE DK ES FR GB GR IT LI LU NL SE

(71) Applicant: **FERRANTI CREDITPHONE LIMITED**
**St. Mary's Road**
**Moston, Manchester M10 OBE(GB)**

(72) Inventor: **Buisseret, Timothy**
**29 Bevill Square, St. Stephens**
**Salford, Lancashire M3 6BB(GB)**
Inventor: **Pickin, John R.**
**Keeper's Cottage's Henshaw lane**
**Siddington, Macclesfield(GB)**

(74) Representative: **Morton, Colin David**
**Keith W Nash & Co. Pearl Assurance House**
**90-92 Regent Street**
**Cambridge CB2 1DP(GB)**

(54) Telephone handset.

(57) A telephone handset (18, 20, 22) is capable of communicating by radio with a base station (12, 14, 16) in a cordless telephone system. The handset comprises a store into which the handset user enters the telephone numbers of callers by whom he wishes to be paged (eg family, friends, business contacts). To each caller the user issues a corresponding paging number. When a caller wishes to contact the handset user, the caller dials the paging number, the handset receives a paging signal which is correlated with a number in the store and this identifies the caller. Alert means on the handset alert the user that he is being paged.

EP 0 381 326 A2

## Telephone Handset

### Field of the Invention

This invention relates to a handset for communicating by radio with a base station in a cordless telephone system.

### Background to the Invention

A known cordless telephone system comprises a plurality of fixed base stations which are connected to the public switched telephone network (PSTN). Subscribers to the system have cordless telephones in the form of portable handsets which are capable of establishing radio communication with an in-range base station. The radio communication between the base stations and handsets may be in the form of analogue or digital modulation of a carrier. Each handset is accorded an identification number which, on recognition and acceptance by a base station, enables a call to be set up between the base station and the handset. In a simple domestic installation a single base station can establish communication with a plurality of authorised handsets. An incoming call from the PSTN to the base station radiates a signal which initiates ringing of all the handsets which are authorised to use that base station. Hence, calls may be made and received by the users of the authorised handsets.

The base station may alternatively be located in a public place and be equipped to receive calls from all handsets which have authorised account codes. This system is known as a telepoint system and the base station is known as a telepoint. In this public mode the base station fulfils a similar function to a pay phone and is accessible to all handset owners who are registered on the telepoint service. Any handset user within range of a base station may initiate a call but because the handset is not dedicated to any particular base station it is more difficult to arrange matters such that the handset can receive a call.

This problem has been tackled by the use of pagers, and UK Patent Specification 2179823A discloses a cordless telephone system using message paging. In this prior specification a call to a portable handset is initiated by a paging signal which is in the form of a message representative of the caller's number. The paging signal is received by the portable handset which is capable of storing and/or displaying in numeric form the message transmitted. Message pagers are expensive and the present invention adopts an alternative and cheaper approach to the provision of a paging facility in a handset for a cordless telephone system.

### Summary of the Invention

According to the invention a telephone handset for communicating by radio with a base station in a cordless telephone system comprises a store into which the handset user may enter the telephone numbers of callers to each of whom the user issues a corresponding paging number so that when a caller dials the paging number the handset receives a paging signal which identifies the caller, means for correlating an incoming paging signal from a caller with the corresponding telephone number stored in the store, and alert means for alerting the user that he is being paged. Hence, in the invention the user enters the telephone numbers of the callers from whom he wishes to receive calls and issues the callers with respective paging numbers, all of which (when dialled by the callers) are routed to the user's handset so that the called number identifies the caller. The callers who have been issued with these paging numbers are the only people who can page the user, but the user can change the identities of the callers to suit his changing needs, within the constraint imposed by the capacity of the store to retain the different telephone numbers.

The alert means may produce an audible warning tone or tones or may alternatively be silent, for example producing a vibration and/or visible display. The form of the alert signal can indicate a pre-assigned caller's identity and/or the urgency of the call.

Assuming that the user is in range of a base station, the handset may be capable of dialling the caller by some form of short form dialling, e.g. by the user depressing a key (e.g. the hash key) on a key pad of the handset.

In a refinement, the handset may detect when it is in range of of a base station before dialling the caller, the handset notifying the user by the alert means that the caller's pre-stored number is about to be dialled.

A yet further refinement is for the handset not only to detect when it is in range of a base station but also after automatically dialling the pre-stored caller's number to issue a ringing tone to notify the user when the caller answers. To the user this appears to be a incoming call but in reality the user has initiated the call.

The incoming paging signal is preferably in binary form. In a preferred embodiment each paging signal consists of three binary bits giving eight possible signals. These eight possible signals may be related to eight different addresses in the store in which the user stores the telephone numbers of eight different callers by whom he wishes to be paged. Alternatively, the eight different addresses in the store could be used to enter four different telephone numbers each with two different levels of urgency, or any other combination of different numbers and different urgency levels which can be accommodated by the eight different signal states.

A handset according to the invention will now be described by way of example with reference to the accompanying drawings in which:

Figure 1 shows a cordless telephone system in diagrammatic view, and

Figure 2 shows how a caller pages a handset user.


Description of the Preferred Embodiment

Referring to the drawing, a plurality of base stations 12, 14, 16 is linked by cable to the public switched telephone network (PSTN) 10. These base stations are typically located in public places such as railway stations, airports or petrol filling stations. Authorised subscribers to the cordless telephone system have portable handsets 18, 20 22 etc. and each handset is capable of establishing radio communication with any base station which recognises an identification number radiated by the handset and sets up a radio link between the base station and the authorised handset. Each handset may thus initiate a call in a manner well known in cordless telephone systems.

The invention is concerned with the way in which the handset is capable of accepting a paging signal to alert the handset user to the fact that a caller is attempting to make communication. Paging is achieved by a paging service with which the cordless telephone system is associated. The paging service has a plurality of transmitters which cover the country.

Each handset has a store with addresses into which the handset user initially enters the telephone numbers of callers by whom the user wishes to be paged. These callers may be four in number, for example the user's wife, his business secretary, his solicitor and his stockbroker. The handset store has the capacity to accept eight different numbers so the user is able to assign two different levels of ·urgency to each caller. The user requests eight paging numbers from the paging service and allocates two paging numbers to each caller. Each caller dials one of the paging numbers to contact the user on a routine basis and the caller dials the other of the paging numbers to contact the user on an urgent basis. The user may alternatively assign the eight different paging numbers to eight different callers, without discrimination as to urgency.

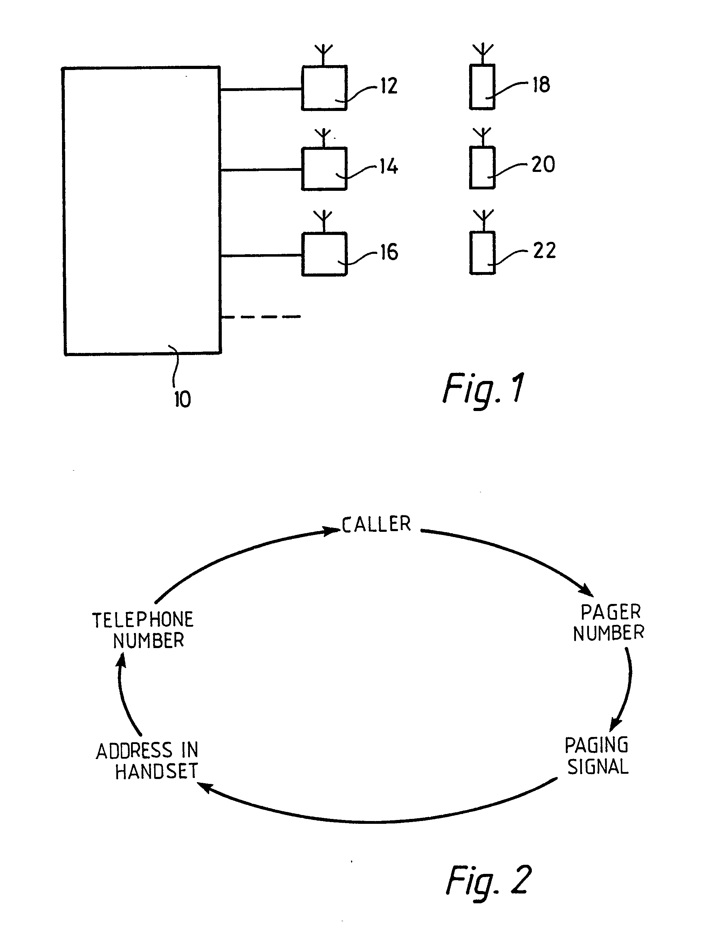

When a caller wishes to call the user, the caller dials his pre-assigned paging number which is routed via the PSTN to the paging service. It is converted to a digitally coded signal, routed to the paging service transmitters and radiated by all the paging service transmitters. This is detected as an incoming paging signal to all handsets. The particular user's handset for which the call is intended will match the incoming paging signal to one of the telephone numbers stored in the store in the handset and this will identify the caller. The handset will give the user an audible or visual alert to advise him that he is being paged, the alert indicating the degree of urgency (where appropriate). Assuming that the user is within range of a base station, he may then adopt some form of short form dialling, e.g. by simply depressing the hash key on the key pad of his handset which will then dial the prestored number of the caller so as to establish the desired link between the caller and the user. This sequence, commencing and finishing with the caller, is illustrated diagrammatically in Figure 2.

The method of payment for calls made by the handset can be based on the logging and storage of all calls through the base stations. Such stored call charge information can be transmitted to a central billing computer by means of a modem within the base station upon the receipt of a command from that central billing computer. Alternatively the telephone system to which the public base station is connected may store the call charge information and provide such information to the operator of the base stations.

On both of the above systems the telephone call is made and subsequently paid for by the handset user. Because the operator allows the handset user to have credit in respect of the calls he makes via the base station terminal, this system is called a Creditphone terminal.

Yet another method of call payment could be for the handset itself to carry a digital store which has a number in it which is related to prepayments which have been made by the handset user. During the course of a telephone call made via a base station, this store can then be decremented in accordance with the accumulating cost of the call. It is necessary in such a prepayment system to have means for increasing the number in the digital store in accordance with prepayments made by the handset user.


Claims

1. A telephone handset for communicating by radio with a base station in a cordless telephone system, the handset comprising a store into which the handset user can enter the telephone numbers of callers to each of whom the user issues a corresponding paging number so that when a caller dials the paging number the handset receives a paging signal which identifies the caller, means for correlating an incoming paging signal from a caller with the corresponding telephone number stored in the store, and alert means for alerting the user that he is being paged.

2. A telephone handset according to claim 1, wherein each incoming paging signal is in binary form.

3. A telephone handset according to claim 2, wherein each paging signal consists of three binary bits giving eight possible signals.

4. A telephone handset according to claim 3, wherein the eight possible signals are related to eight different addresses in the store in which the user stores the telephone numbers of eight different callers by whom he wishes to be paged.

5. A telephone handset according to claim 3, wherein the eight different addresses in the store are used to enter four different telephone numbers each with two different levels of urgency, or any other combination of different numbers and different urgency levels which can be accommodated by the eight different signal states.

6. A telephone handset according to any of the preceding claims, wherein the handset is capable of dialling the caller by some form of short form dialling, eg by the user depressing a key on a key pad of the handset, assuming that the user is in range of a base station.

7. A telephone handset according to any of the preceding claims, wherein the handset can detect when it is in range of a base station before dialling the caller, the handset notifying the user by the alert means that the caller's pre-stored number is about to be dialled.

8. A telephone handset according to any of claims 1 to 5, wherein the handset is capable of detecting when it is in range of a base station, automaticaly dialling the pre-stored caller's number and issuing a ringing tone to notify the user when the caller answers.

*Fig.1*

*Fig. 2*